# EUROPEAN PATENT SPECIFICATION

(11) **EP 3 690 592 B1**
(45) Date of publication and mention of the grant of the patent: **28.04.2021**
(21) Application number: 19186663.1
(22) Date of filing: 17.07.2019
(51) Int. Cl.: G05D 7/06

(54) **CONTROL VALVE**
REGELVENTIL
VANNE DE COMMANDE

(30) Priority: 30.01.2019 EP 19154639
(43) Date of publication of application: 05.08.2020
(73) Proprietor: Siemens Schweiz AG, 8047 Zürich (CH)
(72) Inventor: Huber, Wolfgang, 6333 Hünenberg See (CH); Petry, Karl-Heinz, 8864 Reichenburg (CH)
(74) Representative: Maier, Daniel Oliver

(56) References cited:
- WO-A2-2004/010234
- WO-A2-2007/127897
- US-A1- 2017 343 402

## Description

### Background

The present disclosure relates to an improved control valve. The present disclosure focuses on a control valve wherein the flow of a fluid is a function of the position of a throttle. More particularly, the control valve as disclosed herein anticipates changes in flow rates and adjusts a time constant accordingly.

Flow control valves are commonly employed in HVAC (heating, ventilation, air conditioning) systems of structures. These systems typically circulate a fluid such as water through a plurality of conduits in order to provide heating or cooling. The purpose of a flow control valve is to achieve a controlled flow of a fluid through the conduits of the circuit.

The amount of water flowing through the valve is substantially governed by the position of the throttle. The position of the throttle is typically set by an actuator. The actuator sets the position of the throttle in response to a signal from a controller.

A flow sensor may be arranged in a fluid path of the valve to provide readings of flow rate through the fluid path. The controller may read signals indicative of a flow rate from the sensor. The controller may then adjust the position of the throttle in response to the flow rate signal.

The European patent application EP2937759A1 was filed on 4 April 2014. EP2937759A1 was published on 28 October 2015. The patent application EP2937759A1 teaches a pressure regulated valve with a valve body 1, with an inlet port 2 and with an outlet port 3. A piston 9 is arranged in a fluid path 4 extending between the inlet port 2 and the outlet port 3. A spring 13 urges the piston 9 to open the fluid path 4. A channel 15 connects the inlet port 2 to a first end of the piston 9. The channel 15 is separated from the outlet port 3 of the valve via a diaphragm 18. Due to the channel 15 and the diaphragm 18, the piston 9 moves in response to different pressures applied at the inlet port 2 and at the outlet port 3.

A European patent application EP0377913A2 was filed on 9 June 1989. The application EP0377913A2 was published on 18 July 1990. EP0377913A2 discloses an adaptive digital filter which is responsive to the rate of change of an input signal. The filter 22 of EP0377913A2 connects to a pressure sensor 10. A difference DeltaS is determined between a first signal and a second signal. If that difference DeltaS is below a threshold ΔLSB, the filter 22 will employ a maximum time constant K1 + K2. The time constant of the filter 22 will otherwise be adjusted downward as a function of the difference DeltaS between the first and the second signal.

A patent application US2006/0245132A1 was filed on 27 April 2006. The application US2006/0245132A1 was published on 2 November 2006. US2006/0245132A1 teaches a time constant automatic adjusting circuit, filter circuit system, and method of automatically adjusting time constant. According to US2006/0245132A1, a phase comparison circuit 102 compares the phase of an output signal with a phase of a clock signal. An output voltage of the phase comparison circuit 102 is compared to reference signals Vref1, Vref2, and Vrefn via differential amplifiers 103-1, 103-2, and 103-n. An up/down counter 104 collects the signals from the differential amplifiers 103-1, 103-2, and 103-n. The up/down counter 104 produces a counted bit signal as a function of these collected signals. Finally, a control circuit 105 controls a time constant of a filter circuit 101 in response to the counted bit signal produced by the up/down counter 104.

An international patent application WO2007/27897A2 was filed on 27 April 2007. The application was published on 8 November 2007. WO2007/27897A2 deals with an adaptive response time closed loop control algorithm.

A patent application US2017/43402A1 was filed on 30 May 2017. The application was published on 30 November 2017. US2017/43402A1 teaches a flow rate control device.

An international patent application WO2004/10234A2 was filed on 17 July 2003. The application was published on 29 January 2004. WO2004/10234A2 teaches methods and apparatus for pressure compensation in a mass flow controller.

The present disclosure teaches a control valve that samples signals from a flow sensor as an actuator of the valve moves. The instant disclosure focuses on a control valve that samples signals in response to changes in valve stroke.

### Summary

The present disclosure leverages insight gained from rapid changes in fluid flow, where these changes are caused by a throttle changing its position. There is a need to record values of flow associated with changes in valve stroke. That way, insight can be gained into the dynamics of fluid flow in consequence of changes in valve stroke. The object can be achieved by increasing the rate at which flow values are sampled while moving the throttle. The object can also be achieved by measuring at least one instantaneous value of fluid flow while changing a position of the throttle.

To that end, the instant disclosure provides a control valve comprising an inlet port, an outlet port, and a fluid path extending between the inlet port and the outlet port; a throttle situated in the fluid path, and an actuator coupled to the throttle, the throttle being selectively displaceable between a first and a second position; a sensor for sampling one or more parameters of a fluid flowing through the fluid path, a filter having a time constant and being in operative communication with the sensor and being configured to filter parameter signals indicative of the one or more parameters using the time constant; a controller in operative communication with the actuator and being in operative communication with the filter, the controller being configured to: transmit a first signal indicative of the first position to the actuator, the first signal causing the actuator to displace the throttle to the first position; transmit a second signal indicative of the second position to the actuator, the second signal causing the actuator to displace the throttle to the second position; compare the first signal and the second signal; if the first position is different from the second position, perform at least one of: transmit a time constant signal to the filter, the time constant signal causing the filter to change its time constant; or transmit a disable signal to the filter, the disable signal causing the filter to stop filtering parameter signals originating from the sensor.

It is a related object of the present disclosure to record an instantaneous flow signal in response to a demand for such a signal and to make that instantaneous signal readily available at the controller of the control valve. The flow signal can then be readily processed by the controller.

It is another object of the present disclosure to continuously sample flow values and to sample flow values faster in response to a change in valve position.

It is also an object of the instant disclosure to make optimum use of the bandwidth of a communication link involving the sensor, the filter, and the controller. The communication link can actually be a communication bus and other entities can connect to the same communication bus. In order to not jam the communication bus, flow values are rapidly communicated over the bus only where necessary.

It is also an object of the instant disclosure to make optimum use of the computation capacity of a microcontroller or of a microprocessor within the controller. The microcontroller or microprocessor may also process signals other than flow values. The control valve and the method described herein avoid unnecessary computations while there is little change in fluid flow.

It is a further object of the present disclosure to harness commercially available sensors for some embodiments such as flow sensors producing analog signals in the ranges between
0 Volt and 2 Volts,
0 Volt and 3 Volts,
0 Volt and 3.3 Volts,
0 Volt and 5 Volts, or
0 Volt and 10 Volts, or
0 millliAmpere and 20 milliAmperes.

It is still another object of the instant disclosure to provide a control valve that functions with constrained flow sensors, where such constrained flow sensors include analog-to-digital conversion as well as a (digital) communication interface. A constrained flow sensor may also comprise an energy harvesting circuit to secure supply with electric energy.

It is yet another object of the present disclosure to limit within the control valve the number of components that are prone to failure. To that end, a single bus can be employed that passes both data and electric energy along the bus. Also an analog-to-digital converter can be employed that is arranged together with the microprocessor or microcontroller of the controller on the same system-on-a-chip.

### Brief description of the drawings

Various features will become apparent to those skilled in the art from the following detailed description of the disclosed non-limiting embodiments. The drawings that accompany the detailed description can be briefly described as follows:
FIG 1 is a schematic representation of a control valve according to this disclosure.
FIG 2 shows details of a controller of the control valve.
FIG 3 schematically illustrates a control valve wherein the flow sensor provides a filter.

### Detailed description

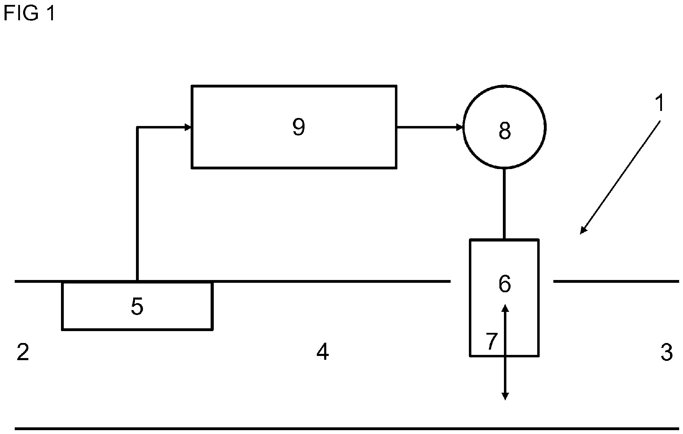

FIG 1 shows the various principal and optional components of the control valve 1 of the instant disclosure. The control valve comprises openings forming an inlet port 2 and an outlet port 3. A fluid path 4 extends between the inlet port 2 and the outlet port 3. The inlet port 2 and the outlet port 3 allow flow of a fluid through the valve. In a preferred embodiment, the fluid is a liquid. In particularly preferred embodiment, the fluid flowing through the valve is water or a mixture containing water.

The control valve 1 comprises a flow sensor 5 such as an ultrasonic flow meter and/or a vortex flow meter. The flow sensor 5 is arranged to provide signals indicative of fluid flow through the fluid path 4. In an embodiment, the flow sensor 5 is a mass flow sensor such as a thermal mass flow sensor. The flow sensor 5 advantageously projects into the fluid path 4. The thermal mass flow sensor 5 may, by way of non-limiting example, employ constant temperature anemometry and/or on constant power anemometry to measure flow. In another embodiment, the flow sensor 5 is a volumetric flow sensor.

The valve 1 provides a throttle 6 such as a valve plug and/or a valve member of a ball valve and/or a disk of a butterfly valve. The throttle 6 is situated in the fluid path 4. An arrow 7 shown in FIG 1 indicates movement of the throttle 6. It is envisaged that the throttle 6 projects into the fluid path 4. The throttle 6 can move between an open position affording fluid flow of a fluid and a closed position obturating the fluid path 4. It is envisaged that the open position of the throttle 6 fully opens the fluid path 4. That is, a change in the fully open position of the throttle 6 does not entail an increase in fluid flow through the valve 1. Likewise, it is envisaged that the closed position obturating the fluid path 4 is a fully closed position. That is, a change in the fully closed position of the throttle 6 does not entail a decrease in fluid flow through the valve 1.

In an embodiment, the throttle 6 is continuously movable between the open position and the closed position. In an alternate embodiment, the throttle 6 moves between the open position and the closed position in discreet steps.

An actuator 8 such as an electric motor and/or a piezoelectric actuator mechanically couples to the throttle 6. According to an aspect of the instant disclosure, a valve shaft and/or a valve stem mechanically couples the actuator 8 and the throttle 6. Also, a clutch may couple the actuator 8 and the throttle 6. The actuator 8 and the throttle 6 are coupled such that the actuator 8 adjusts the throttle 6 between the open position and the closed position. In an embodiment, the actuator 8 continuously moves the throttle 6 between the open position and the closed position. In an alternate embodiment, the actuator 8 selectively moves the throttle 6 between the open position and the closed position. The actuator 8 can, by way of non-limiting example, shift a valve plug 6 and/or rotate a valve member 6 of a ball valve. The actuator 8 can, by way of another non-limiting example, also rotate a disk 6 of a butterfly valve.

A controller 9 having a processor such as a microcontroller or a microprocessor is also shown in FIG 1. The controller 9 connects to the flow sensor 5. The connection may afford unidirectional communication from the flow sensor 5 to the controller 9 or bidirectional communication between the units 1 and 5. A unidirectional link confers advantages in terms of reduced complexity. A bidirectional link confers advantages in terms of more flexible and more nuanced communication.

In a particular embodiment, the controller 9 obtains analog signals from the flow sensor 5. The analog signals can, by way of non-limiting example, be signals such as 0 milliAmpere to 20 milliAmperes and/or 4 milliAmperes to 20 milliAmperes and/or 0 Volt to 2 Volts and/or 0 Volt to 3 Volts and/or 0 Volt to 3.3 Volts and/or 0 Volt to 5 Volts and/or 0 Volt to 10 Volts signals. The analog signals are converted into digital signals by an analog-to-digital converter and/or by a delta-sigma modulator of the controller 9. The analog-to-digital converter can be separate from the microprocessor or from the microcontroller of the controller 9. The analog-to-digital converter can also be arranged together with the microprocessor or microcontroller on the same system-on-a-chip. The delta-sigma modulator can be separate from the microprocessor or from the microcontroller of the controller 9. The delta-sigma modulator can also be arranged together with the microprocessor or microcontroller on the same system-on-a-chip.

In an alternate embodiment, the controller 9 receives digital signals from the flow sensor 5. To that end, a communication bus such as a serial communication bus and/or a parallel communication bus may be employed. The skilled person envisages busses employing network cables as well as wireless busses. The communication bus ideally uses a serial communication bus protocol and/or a parallel communication bus protocol. A bus that is compatible with at least one of the standards
- IEEE 802.3af:2003 and / or
- IEEE 802.3at:2009 and / or
- IEEE 802.3au:2006
can also afford communication between the flow sensor 5 and the controller 9. A communication bus in accordance with the above standards employs a single network cable to afford data communication and power supply. That is, the controller 9 can supply the flow sensor 5 with power or vice versa.

The controller 9 also connects to the actuator 8. The connection may afford unidirectional communication from the controller 9 to the actuator 8 or bidirectional communication between the units 1 and 8. A unidirectional link confers advantages in terms of reduced complexity. A bidirectional link confers advantages in terms of more flexible and more nuanced communication.

In a particular embodiment, the controller 9 transmits analog signals to the actuator 8. The analog signals can, by way of non-limiting example, be signals such as 0 milliAmpere to 20 milliAmperes and/or 4 milliAmperes to 20 milliAmperes and/or 0 Volt to 2 Volts and/or 0 Volt to 3 Volts and/or 0 Volt to 3.3 Volts and/or 0 Volt to 5 Volts signals. The controller 9 advantageously comprises a digital-to-analog converter to produce these analog signals. The digital-to-analog converter can be separate from the microprocessor or from the microcontroller of the controller 9. The digital-to-analog converter can also be arranged together with the microprocessor or together with the microcontroller on the same system-on-a-chip.

In an alternate embodiment, the controller 9 transmits digital signals to the actuator 8. To that end, a communication bus such as a serial communication bus and/or a parallel communication bus may be employed. The skilled person envisages busses employing network cables as well as wireless busses. The communication bus ideally uses a serial communication bus protocol and/or a parallel communication bus protocol. A bus that is compatible with at least one of the standards
- IEEE 802.3af:2003 and / or
- IEEE 802.3at:2009 and / or
- IEEE 802.3au:2006
can also afford communication between controller 9 and the actuator 8. A communication bus in accordance with the above standards employs a single network cable to afford data communication and power supply. That is, the controller 9 can supply the actuator 8 with power or vice versa.

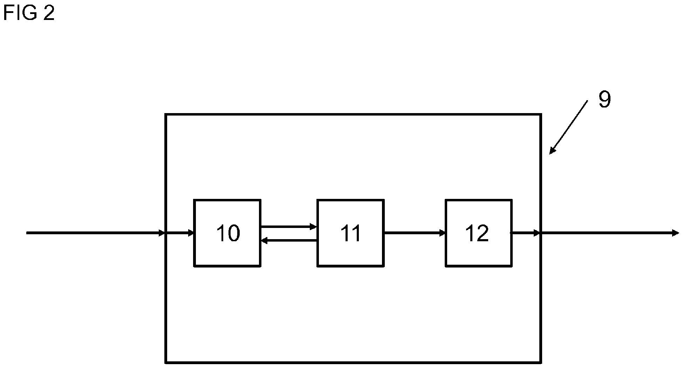

Now referring to FIG 2, details of the controller 9 are illustrated. The controller 9 comprises a filter 10 and a processing unit 11. The controller 9 advantageously also comprises an output unit 12.

The filter 10 of the controller 9 is in operative communication with the flow sensor 5. The filter 10 reads analog and/or digital signals from the flow sensor 5. It is envisaged that the filter 10 is a low-pass filter having a cutoff frequency. The cutoff frequency is an inverse of the time constant of the filter 10. At the cutoff frequency of the filter advantageously reduces signal amplitude by half (3 decibels). It is also envisaged that the filter 10 is a moving average filter.

In an embodiment, the filter 10 comprises an analog-to-digital converter. That is, the filter 10 receives analog signals from the flow sensor 5 and converts these analog signals into digital representations. The filter 10 subsequently transmits the digital representation to the processing unit 11. The analog-to-digital converter reads a number of signals per unit of time in accordance with its time constant. The analog-to-digital converter can, by way of non-limiting example, obtain signals at a time constant exceeding 0.1 Hertz and/or exceeding 1 Hertz and/or exceeding 10 Hertz. Higher time constants confer benefits in terms of improved resolution. The time constant of the analog-to-digital converter preferably is user programmable.

In an alternate embodiment, the filter 10 is a digital filter. That is, the filter 10 receives digital signals indicative of flow. The digital filter 10 can be comprised in the controller 1 and/or in the flow sensor 5.

The digital filter 10 reads a number of signals per unit of time in accordance with its time constant. The digital filter 10 can, by way of non-limiting example, obtain digital signals at a time constant below 10 seconds and/or below 1 second and/or below 0.1 seconds. Short time constants confer benefits in terms of improved resolution. The time constant of the digital filter 10 preferably is user programmable.

A bidirectional data link is provided between the processing unit 11 and the filter 10. The processing unit 11 can use the bidirectional data link to control and/or to set the time constant of the filter 10. It is also envisaged that the processing unit 11 harnesses the bidirectional data link to instruct the filter 10 to deliver an instantaneous signal. The bidirectional data link also affords transmission of signals indicative of flow from the filter 10 to the processing unit 11.

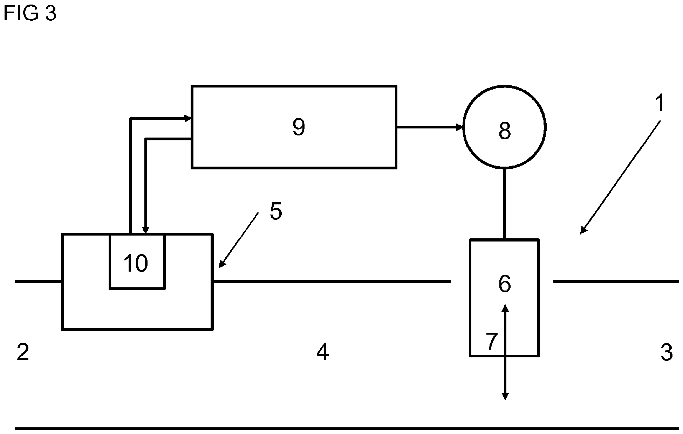

FIG 3 shows a flow sensor 5 comprising a filter 10. Where the filter 10 is part of the flow sensor 5, the processing unit 11 will instruct the flow sensor 5 to deliver readings at a time constant. The processing unit 11 preferably relies on the bidirectional data link to transmit instructions such as a time constant to the flow sensor 5. The flow sensor 5 can, by way of non-limiting example, deliver readings via its filter 10 at a time constant below 10 seconds and/or below 1 second and/or below 0.1 seconds. Short time constants confer benefits in terms of improved resolution. It is also envisaged that the flow sensor 5 can be instructed to deliver an instantaneous reading and/or signal.

The output unit 12 of controller 9 advantageously provides signal processing and/or amplification. To that end, the output unit 12 receives an instruction from the processing unit 11. That instruction can, by way of non-limiting example, be a digital representation of an electric current. The output unit 12 then provides a digital-to-analog converter to produce an analog value of the electric current. An amplifier is ideally provided to amplify the signal originating from the digital-to-analog converter to a signal suitable to drive the actuator 8.

As described in detail herein, the instant disclosure teaches a control valve (1) comprising:
an inlet port (2), an outlet port (3), and a fluid path (4) extending between the inlet port (2) and the outlet port (3);
a throttle (6) situated in the fluid path (4), and an actuator (8) coupled to the throttle (6), the throttle (6) being selectively displaceable between a first and a second position;
a sensor (5) for sampling one or more parameters of a fluid flowing through the fluid path (4), a filter (10) having a time constant and being in operative communication with the sensor (5) and being configured to filter, using the time constant, parameter signals indicative of the one or more parameters;
a controller (9) in operative communication with the actuator (8) and in operative communication with the filter (10), the controller (9) being configured to:
   transmit a first signal indicative of the first position to the actuator (8), the first signal causing the actuator (8) to displace the throttle (6) to the first position;
   transmit a second signal indicative of the second position to the actuator (8), the second signal causing the actuator (8) to displace the throttle (6) to the second position;
   compare the first signal and the second signal;
   if the first position is different from the second position:
      transmit a time constant signal to the filter (10), the time constant signal causing the filter (10) to change its time constant.

The instant disclosure also teaches a control valve (1) comprising:
an inlet port (2), an outlet port (3), and a fluid path (4) extending between the inlet port (2) and the outlet port (3);
a throttle (6) situated in the fluid path (4), and an actuator (8) coupled to the throttle (6), the throttle (6) being selectively displaceable between a first and a second position;
a sensor (5) for sampling one or more parameters of a fluid flowing through the fluid path (4), a filter (10) having a time constant and being in operative communication with the sensor (5) and being configured to filter parameter signals indicative of the one or more parameters using the time constant;
a controller (9) in operative communication with the actuator (8) and in operative communication with the filter (10), the controller (9) being configured to:
   transmit a first signal indicative of the first position to the actuator (8), the first signal causing the actuator (8) to displace the throttle (6) to the first position;
   transmit a second signal indicative of the second position to the actuator (8), the second signal causing the actuator (8) to displace the throttle (6) to the second position;
   compare the first signal and the second signal;
   if the first position is different from the second position:
      transmit a disable signal to the filter (10), the disable signal causing the filter (10) to stop filtering parameter signals originating from the sensor (5).

According to an aspect of the present disclosure, the first (position) signal indicative of the first position comprises a pulse-width modulated signal. According to another aspect of the present disclosure, the first (position) signal indicative of the first position comprises a signal produced by an inverter of the control valve (1). To that end, the output module (12) of the controller (9) can comprise an inverter. According to yet another aspect of the present disclosure, the first (position) signal indicative of the first position comprises a digital data packet transmitted via a digital communication bus of the control valve (1) in accordance with a digital communication bus protocol. According to an aspect of the present disclosure, the second (position) signal indicative of the second position comprises a pulse-width modulated signal. According to another aspect of the present disclosure, the second (position) signal indicative of the second position comprises a signal produced by an inverter of the control valve (1). To that end, the output module (12) of the controller (9) can comprise an inverter. According to yet another aspect of the present disclosure, the second (position) signal indicative of the second position comprises a digital data packet transmitted via a digital communication bus of the control valve (1) in accordance with a digital communication bus protocol.

In an embodiment, the filter (10) is in operative communication with the sensor (5). The filter (10) is preferably configured to continuously and/or repeatedly record and/or sample parameter signals originating from the sensor (5). The filter (10) is preferably configured to continuously and/or repeatedly record and/or sample parameter signals originating from the sensor (5).

The actuator (8) preferably is mechanically coupled to the throttle (6). Ideally, the actuator (8) is directly mechanically coupled to the throttle (6). The actuator (8) can, by way of non-limiting example, be directly mechanically coupled to the throttle (6) using a valve stem and/or using a valve shaft.

The throttle (6) advantageously is a displaceable throttle (6). Ideally, the throttle (6) is displaceable inside the fluid path (4). It is envisaged that the throttle (6) acts on a flow of a fluid through the fluid path (4). In an embodiment, the throttle (6) is selectively displaceable between a first position of the throttle (6) inside the fluid path (4) and a second position of the throttle (6) inside the fluid path (4). It is envisaged that at least one of
the first position of the throttle (6) or
the second position of the throttle (6)
   amounts to or is an open position, in particular a fully open position, of the throttle (6).

It is envisaged that the fluid path (4) comprises a fluid channel and/or a flow channel and/or a flow conduit.

It is also envisaged that the throttle (6) is selectively displaceable in the fluid path (4) between a first and a second position.

The present disclosure also teaches any of the aforementioned control valves (1), wherein the disable signal causes the filter (10) to (instantly) stop filtering parameter signals originating from the sensor (5) and causes the filter (10) to (directly) forward parameter signals originating from the sensor (5) to the controller (9).

The present disclosure also teaches any of the aforementioned control valves (1), wherein the disable signal causes the filter (10) to (instantly) stop filtering parameter signals originating from the sensor (5) and causes the filter (10) to directly transmit parameter signals as originating from the sensor (5) to the controller (9).

The present disclosure further teaches any of the aforementioned control valves (1),
wherein the time constant of the filter (10) is a programmable time constant; and
wherein the time constant signal causes the filter (10) to decrease its programmable time constant.

The present disclosure yet further teaches any of the aforementioned control valves (1),
wherein the time constant signal is indicative of a changed time constant; and
wherein the time constant signal causes the filter (10) to set its time constant to the changed time constant.

The present disclosure yet further teaches any of the aforementioned control valves (1),
wherein the time constant signal is indicative of a changed time constant; and
wherein the time constant signal causes the filter (10) to set its time constant in accordance with the changed time constant.

The present disclosure yet further teaches any of the aforementioned control valves (1),
wherein the time constant signal is indicative of a changed time constant; and
wherein the time constant signal causes the filter (10) to set its time constant as a function of the changed time constant.

The present disclosure yet further teaches any of the aforementioned control valves (1), wherein the filter (10) comprises a low-pass filter having a cutoff frequency, the cutoff frequency being an inverse of the time constant of the filter (10).

The present disclosure yet further teaches any of the aforementioned control valves (1), wherein the filter (10) is a low-pass filter having a cutoff frequency, the cutoff frequency being an inverse of the time constant of the filter (10).

The present disclosure still further teaches any of the aforementioned control valves (1), wherein at the cutoff frequency the filter (10) is configured to reduce amplitudes of parameter signals by half.

The present disclosure still further teaches any of the aforementioned control valves (1), wherein at the cutoff frequency the low-pass filter is configured to reduce amplitudes of parameter signals by half.

The present disclosure still further teaches any of the aforementioned control valves (1), wherein the controller (9) is configured to:
transmit a first position signal indicative of the first position to the actuator (8), the first position signal causing the actuator (8) to displace the throttle (6) to the first position; and
after transmission of the first position signal, transmit a second position signal indicative of the second position to the actuator (8), the second position signal causing the actuator (8) to displace the throttle (6) to the second position.

It is envisaged that the second position signal is transmitted at least 100 milliseconds or at least 200 milliseconds or at least 500 milliseconds or at least 1 second or at least 2 seconds or at least 5 seconds or at least 10 seconds after transmission of the first position signal.

The present disclosure still also teaches any of the aforementioned control valves (1), wherein the filter (10) comprises an analog-to-digital converter, the analog-to-digital converter being in operative communication with the sensor (5).

In an embodiment, the filter (10) is configured to transmit parameter signals indicative of the one or more parameters originating from the sensor (5) to the controller (9) at time intervals defined by a time constant of the filter (10) and/or of the filter.

The controller (9) advantageously comprises a microcontroller and the analog-to-digital converter, the microcontroller and the analog-to-digital converter both being arranged on a single system-on-a-chip.

In an embodiment, the filter (10) comprises a general-purpose input interface and/or a general-purpose input/output interface.

The present disclosure still further teaches any of the aforementioned control valves (1),
wherein the sensor comprises a flow sensor (5); and
wherein the flow sensor (5) is arranged to record one or more parameters indicative of a flow rate through the fluid path (4).

It is envisaged that the sensor (5) is a flow sensor such as a mass flow sensor and/or a volumetric flow sensor. It is also envisaged that the sensor (5) comprises a flow sensor such as a mass flow sensor and/or a volumetric flow sensor.

The present disclosure further teaches any of the aforementioned control valves (1), wherein the sensor (5) comprises the filter (10) .

The present disclosure still further teaches any of the aforementioned control valves (1), wherein the controller (9) comprises the filter (10).

In an embodiment, the controller (9) physically comprises the filter (10). In an alternate embodiment, the sensor (5) physically comprises the filter (10).

The present disclosure also teaches any of the aforementioned control valves (1),
wherein the control valve (1) comprises a digital communication bus; and
wherein the controller (9) is in operative communication with at least one of
the filter (10) or
the actuator (8)
via the digital communication bus and using a digital communication bus protocol.

In an embodiment, the controller (9) is in operative communication with the filter (10) and with the actuator (8) via the digital communication bus and using a digital communication bus protocol.

The present disclosure still further teaches the aforementioned control valve (1),
wherein the digital communication bus is configured to transmit data signals along with electric power; and
wherein the controller (9) is configured to transmit electric power to at least one of
the filter (10) or
the actuator (8)
using the digital communication bus.

Ideally, the controller (9) is configured to transmit (direct current) electric power to the filter (10) and to the actuator (8) using the digital communication bus.

The present disclosure yet further teaches a pressure independent control valve comprising any of the aforementioned control valves (1).

According to an aspect of the present disclosure, an electronic pressure independent control valve comprises any of the aforementioned control valves (1). According to another aspect of the present disclosure, a regulated valve comprises any of the aforementioned control valves (1). According to yet another aspect of the present disclosure, a circuit for heating, ventilation and/or air conditioning comprises any of the aforementioned control valves (1).

The present disclosure also teaches a method for controlling a valve (1), the valve (1) comprising a fluid path (4), a sensor (5) for sampling one or more parameters of a fluid flowing through the fluid path (4), a throttle (6) situated in the fluid path (4), an actuator (8) coupled to the throttle (6), the throttle (6) being selectively displaceable between a first and a second position, the valve (1) comprising a filter (10) having a time constant and being in operative communication with the sensor (5) and being configured to filter parameter signals indicative of the one or more parameters using the time constant;
the method comprising the steps of:
transmitting a first position signal indicative of the first position to the actuator (8), the first position signal causing the actuator (8) to displace the throttle (6) to the first position;
transmitting a second position signal indicative of the second position to the actuator (8), the second position signal causing the actuator (8) to displace the throttle (6) to the second position;
comparing the first and the second position signals;
if the first position is different from the second position, performing at least one of:
   transmitting a time constant signal to the filter (10), the time constant signal causing the filter (10) to change its time constant; or
   transmitting a disable signal to the filter (10), the disable signal causing the filter (10) to stop filtering parameter signals originating from the sensor (5).

It is envisaged that the first and the second position signals are compared in terms of throttle (6) positions.

The present disclosure still teaches a non-transitory, computer-readable medium containing a program which executes the steps of a method according to the present disclosure.

It is envisaged that the computer-readable medium contains instructions that when executed perform the steps and/or perform the method according to the present disclosure. It is also envisaged that the computer-readable medium is tangible.

It should be understood that the disclosure is not restricted to the illustrated embodiments and that various modifications can be made within the scope of the following claims.

### Reference numerals

- 1: valve
- 2: inlet port
- 3: outlet port
- 4: fluid path
- 5: flow sensor
- 6: throttle
- 7: directions of movement of the throttle
- 8: actuator
- 9: controller
- 10: filter
- 11: processing unit
- 12: output unit

## Claims

1. A control valve (1) comprising:
an inlet port (2), an outlet port (3), and a fluid path (4) extending between the inlet port (2) and the outlet port (3);
a throttle (6) situated in the fluid path (4), and an actuator (8) coupled to the throttle (6), the throttle (6) being selectively displaceable between a first and a second position;
a sensor (5) for sampling one or more parameters of a fluid flowing through the fluid path (4), a filter (10) having a time constant and being in operative communication with the sensor (5) and being configured to filter, using the time constant, parameter signals indicative of the one or more parameters;
a controller (9) in operative communication with the actuator (8) and in operative communication with the filter (10), the controller (9) being configured to:
transmit a first signal indicative of the first position to the actuator (8), the first signal causing the actuator (8) to displace the throttle (6) to the first position;
transmit a second signal indicative of the second position to the actuator (8), the second signal causing the actuator (8) to displace the throttle (6) to the second position;
compare the first signal and the second signal;
**characterized in that**
if the first position is different from the second position, perform:
transmit a disable signal to the filter (10), the disable signal causing the filter (10) to stop filtering parameter signals originating from the sensor (5) and causing the filter (10) to directly forward parameter signals originating from the sensor (5) to the controller (9).

2. The control valve (1) according to claim 1, wherein the disable signal causes the filter (10) to stop filtering parameter signals originating from the sensor (5) and causes the filter (10) to directly transmit parameter signals as originating from the sensor (5) to the controller (9).

3. The control valve (1) according to any of the claims 1 to 2, wherein the filter (10) comprises a low-pass filter having a cutoff frequency, the cutoff frequency being an inverse of the time constant of the filter (10).

4. The control valve (1) according to claim 3, wherein at the cutoff frequency the filter (10) is configured to reduce amplitudes of parameter signals by half.

5. The control valve (1) according to any of the claims 1 to 4, wherein the controller (9) is configured to:
transmit a first position signal indicative of the first position to the actuator (8), the first position signal causing the actuator (8) to displace the throttle (6) to the first position; and
after transmission of the first position signal, transmit a second position signal indicative of the second position to the actuator (8), the second position signal causing the actuator (8) to displace the throttle (6) to the second position.

6. The control valve (1) according to any of the claims 1 to 5,
wherein the sensor comprises a flow sensor (5); and
wherein the flow sensor (5) is arranged to record one or more parameters indicative of a flow rate through the fluid path (4).

7. The control valve (1) according to any of the claims 1 to 6, wherein the sensor (5) comprises the filter (10).

8. The control valve (1) according to any of the claims 1 to 6, wherein the controller (9) comprises the filter (10).

9. The control valve (1) according to any of the claims 1 to 8,
wherein the control valve (1) comprises a digital communication bus; and
wherein the controller (9) is in operative communication with at least one of
the filter (10) or
the actuator (8)
via the digital communication bus and using a digital communication bus protocol.

10. The control valve (1) according to claim 9,
wherein the digital communication bus is configured to transmit data signals along with electric power; and
wherein the controller (9) is configured to transmit electric power to at least one of
the filter (10) or
the actuator (8)
using the digital communication bus.

11. A pressure independent control valve comprising a control valve (1) according to any of the claims 1 to 10.

12. A method for controlling a valve (1), the valve (1) comprising a fluid path (4), a sensor (5) for sampling one or more parameters of a fluid flowing through the fluid path (4), a throttle (6) situated in the fluid path (4), an actuator (8) coupled to the throttle (6), the throttle (6) being selectively displaceable between a first and a second position, the valve (1) comprising a filter (10) having a time constant and being in operative communication with the sensor (5) and being configured to filter parameter signals indicative of the one or more parameters using the time constant;
the method comprising the steps of:
transmitting a first position signal indicative of the first position to the actuator (8), the first position signal causing the actuator (8) to displace the throttle (6) to the first position;
transmitting a second position signal indicative of the second position to the actuator (8), the second position signal causing the actuator (8) to displace the throttle (6) to the second position;
comparing the first and the second position signals;
**characterized in that**
if the first position is different from the second position, performing:
transmitting a disable signal to the filter (10), the disable signal causing the filter (10) to stop filtering parameter signals originating from the sensor (5) and causing the filter (10) to directly forward parameter signals originating from the sensor (5) to the controller (9).

13. A non-transitory, computer-readable medium containing a program which executes the steps of claim 12.

## Patentansprüche

1. Regelventil (1), das Folgendes umfasst:
eine Einlassöffnung (2), eine Auslassöffnung (3) und einen zwischen der Einlassöffnung (2) und der Auslassöffnung (3) verlaufenden Fluidpfad (4),
eine Drossel (6), die sich im Fluidpfad (4) befindet, und ein Stellelement (8), das mit der Drossel (6) gekoppelt ist, wobei sich die Drossel (6) wahlweise zwischen einer ersten und einer zweiten Position verschieben lässt,
einen Sensor (5) zum Abfragen von einem oder mehreren Parametern eines den Fluidpfad (4) durchströmenden Fluids, einen Filter (10) mit einer Zeitkonstanten, der mit dem Sensor (5) kommunikativ verbunden und so konfiguriert ist, dass er mithilfe der Zeitkonstanten Parametersignale filtert, die den einen oder die mehreren Parameter angeben,
eine Steuerung (9), die mit dem Stellelement (8) und mit dem Filter (10) kommunikativ verbunden ist, wobei die Steuerung (9) so konfiguriert ist, dass sie:
ein erstes Signal, das die erste Position angibt, zu dem Stellelement (8) überträgt, wobei das erste Signal das Stellelement (8) dazu veranlasst, die Drossel (6) in die erste Position zu verschieben,
ein zweites Signal, das die zweite Position angibt, zu dem Stellelement (8) überträgt, wobei das zweite Signal das Stellelement (8) dazu veranlasst, die Drossel (6) in die zweite Position zu verschieben,
das erste und das zweite Signal vergleicht,
**dadurch gekennzeichnet, dass** sie,
wenn sich die erste von der zweiten Position unterscheidet, Folgendes durchführt:
Übertragen eines Deaktivierungssignals zum Filter (10), das den Filter (10) dazu veranlasst, das Filtern von aus dem Sensor (5) stammenden Parametersignalen einzustellen und aus dem Sensor (5) stammende Parametersignale direkt an die Steuerung (9) weiterzuleiten.

2. Das Regelventil (1) nach Anspruch 1, wobei das Deaktivierungssignal den Filter (10) dazu veranlasst, das Filtern von aus dem Sensor (5) stammenden Parametersignalen einzustellen und im Sensor (5) entstehende Parametersignale direkt zur Steuerung (9) zu übertragen.

3. Das Regelventil (1) nach einem der Ansprüche 1 bis 2, wobei der Filter (10) einen Tiefpassfilter mit einer Grenzfrequenz umfasst, bei der es sich um einen Kehrwert der Zeitkonstanten des Filters (10) handelt.

4. Das Regelventil (1) nach Anspruch 3, wobei der Filter (10) so konfiguriert ist, dass er an der Grenzfrequenz die Amplitude von Parametersignalen halbiert.

5. Das Regelventil (1) nach einem der Ansprüche 1 bis 4, wobei die Steuerung (9) so konfiguriert ist, dass sie:
ein erstes Positionssignal, das die erste Position angibt, zu dem Stellelement (8) überträgt, wobei das erste Positionssignal das Stellelement (8) dazu veranlasst, die Drossel (6) in die erste Position zu verschieben, und
nach dem Übertragen des ersten Positionssignals ein zweites Positionssignal, das die zweite Position angibt, zu dem Stellelement (8) überträgt, wobei das zweite Positionssignal das Stellelement (8) dazu veranlasst, die Drossel (6) in die zweite Position zu verschieben.

6. Das Regelventil (1) nach einem der Ansprüche 1 bis 5,
wobei der Sensor einen Durchflusssensor (5) umfasst und
wobei der Durchflusssensor (5) so angeordnet ist, dass er einen oder mehrere Parameter aufzeichnet, die eine Durchflussrate im Fluidpfad (4) angeben.

7. Das Regelventil (1) nach einem der Ansprüche 1 bis 6, wobei der Sensor (5) den Filter (10) umfasst.

8. Das Regelventil (1) nach einem der Ansprüche 1 bis 6, wobei die Steuerung (9) den Filter (10) umfasst.

9. Das Regelventil (1) nach einem der Ansprüche 1 bis 8,
wobei das Regelventil (1) einen digitalen Kommunikationsbus umfasst und
wobei die Steuerung (9) mit
dem Filter (10) und/oder
dem Stellelement (8)
über den digitalen Kommunikationsbus kommunikativ verbunden ist und ein Digitalkommunikationsbus-Protokoll benutzt.

10. Das Steuerventil (1) nach Anspruch 9,
wobei der digitale Kommunikationsbus so konfiguriert ist, dass er Datensignale mit elektrischem Strom überträgt, und
wobei die Steuerung (9) so konfiguriert ist, dass sie mithilfe des digitalen Kommunikationsbusses elektrischen Strom zu
dem Filter (10) und/oder
dem Stellelement (8) überträgt.

11. Das Druckunabhängiges Regelventil mit einem Regelventil (1) nach einem der Ansprüche 1 bis 10.

12. Verfahren zum Steuern eines Ventils (1), wobei das Ventil (1) Folgendes umfasst: einen Fluidpfad (4), einen Sensor (5) zum Abfragen eines oder mehrerer Parameter eines den Fluidpfad (4) durchströmenden Fluids, eine Drossel (6), die sich im Fluidpfad (4) befindet, ein Stellelement (8), das mit der Drossel (6) gekoppelt ist, wobei sich die Drossel (6) gezielt zwischen einer ersten und einer zweiten Position verschieben lässt, wobei das Ventil (1) einen Filter (10) mit einer Zeitkonstanten umfasst, der mit dem Sensor (5) kommunikativ verbunden und so konfiguriert ist, dass er mithilfe der Zeitkonstanten Parametersignale filtert, die den einen oder die mehreren Parameter angeben,
wobei das Verfahren folgende Schritte umfasst:
Übertragen eines ersten Positionssignals, das die erste Position angibt, zu dem Stellelement (8), wobei das erste Positionssignal das Stellelement (8) dazu veranlasst, die Drossel (6) in die erste Position zu verschieben,
Übertragen eines zweiten Positionssignals, das die zweite Position angibt, zu dem Stellelement (8), wobei das zweite Positionssignal das Stellelement (8) dazu veranlasst, die Drossel (6) in die zweite Position zu verschieben,
Vergleichen des ersten und des zweiten Positionssignals,
**dadurch gekennzeichnet, dass**
wenn sich die erste von der zweiten Position unterscheidet, Folgendes durchgeführt wird:
Übertragen eines Deaktivierungssignals zum Filter (10), das den Filter (10) dazu veranlasst, das Filtern von aus dem Sensor (5) stammenden Parametersignalen einzustellen und aus dem Sensor (5) stammende Parametersignale direkt an die Steuerung (9) weiterzuleiten.

13. Nichtflüchtiges, computerlesbares Medium, das ein Programm enthält, welches die Schritte aus Anspruch 12 durchführt.

## Revendications

1. Vanne de commande (1) comprenant :
un orifice d'entrée (2), un orifice de sortie (3) et une voie de fluide (4) qui s'étend entre l'orifice d'entrée (2) et l'orifice de sortie (3) ;
un étrangleur (6) qui est situé dans la voie de fluide (4), et un actionneur (8) qui est couplé à l'étrangleur (6), l'étrangleur (6) pouvant être déplacé de façon sélective entre une première et une seconde position ;
un capteur (5) pour échantillonner un ou plusieurs paramètre(s) d'un fluide qui s'écoule au travers de la voie de fluide (4), un filtre (10) qui présente une constante de temps et qui est en communication opérationnelle avec le capteur (5) et qui est configuré pour filtrer, en utilisant la constante de temps, des signaux de paramètre qui sont indicatifs des un ou plusieurs paramètres ;
un contrôleur (9) en communication opérationnelle avec l'actionneur (8) et en communication opérationnelle avec le filtre (10), le contrôleur (9) étant configuré pour :
transmettre un premier signal qui est indicatif de la première position à l'actionneur (8), le premier signal forçant l'actionneur (8) à déplacer l'étrangleur (6) dans la première position ;
transmettre un second signal qui est indicatif de la seconde position à l'actionneur (8), le second signal forçant l'actionneur (8) à déplacer l'étrangleur (6) dans la seconde position ;
comparer le premier signal et le second signal ;
**caractérisée en ce que** :
si la première position est différente de la seconde position, réaliser les actions qui suivent :
transmettre un signal de désactivation au filtre (10), le signal de désactivation forçant le filtre (10) à arrêter le filtrage des signaux de paramètre prenant leur origine au niveau du capteur (5) et forçant le filtre (10) à transférer directement les signaux de paramètre prenant leur origine au niveau du capteur (5) au contrôleur (9).

2. La vanne de commande (1) selon la revendication 1, dans laquelle le signal de désactivation force le filtre (10) à arrêter le filtrage des signaux de paramètre prenant leur origine au niveau du capteur (5) et force le filtre (10) à transmettre directement les signaux de paramètre prenant leur origine au niveau du capteur (5) au contrôleur (9).

3. La vanne de commande (1) selon l'une quelconque des revendications 1 à 2, dans laquelle le filtre (10) comprend un filtre passe-bas qui présente une fréquence de coupure, la fréquence de coupure étant un inverse de la constante de temps du filtre (10).

4. La vanne de commande (1) selon la revendication 3, dans laquelle, à la fréquence de coupure, le filtre (10) est configuré pour réduire les amplitudes des signaux de paramètre de moitié.

5. La vanne de commande (1) selon l'une quelconque des revendications 1 à 4, dans laquelle le contrôleur (9) est configuré pour :
transmettre un premier signal de position qui est indicatif de la première position à l'actionneur (8), le premier signal de position forçant l'actionneur (8) à déplacer l'étrangleur (6) dans la première position ; et
après la transmission du premier signal de position, transmettre un second signal de position qui est indicatif de la seconde position à l'actionneur (8), le second signal de position forçant l'actionneur (8) à déplacer l'étrangleur (6) dans la seconde position.

6. La vanne de commande (1) selon l'une quelconque des revendications 1 à 5,
dans laquelle le capteur comprend un capteur d'écoulement (5) ; et
dans laquelle le capteur d'écoulement (5) est agencé pour enregistrer un ou plusieurs paramètre(s) qui est/sont indicatif (s) d'un débit d'écoulement au travers de la voie de fluide (4).

7. La vanne de commande (1) selon l'une quelconque des revendications 1 à 6, dans laquelle le capteur (5) comprend le filtre (10).

8. La vanne de commande (1) selon l'une quelconque des revendications 1 à 6, dans laquelle le contrôleur (9) comprend le filtre (10).

9. La vanne de commande (1) selon l'une quelconque des revendications 1 à 8,
dans laquelle la vanne de commande (1) comprend un bus de communication numérique ; et
dans laquelle le contrôleur (9) est en communication opérationnelle avec au moins l'un parmi
le filtre (10) ou
l'actionneur (8)
via le bus de communication numérique et en utilisant un protocole de bus de communication numérique.

10. La vanne de commande (1) selon la revendication 9,
dans laquelle le bus de communication numérique est configuré pour transmettre des signaux de données en même temps que l'énergie électrique ; et
dans laquelle le contrôleur (9) est configuré pour transmettre l'énergie électrique sur au moins l'un parmi
le filtre (10) ou
l'actionneur (8)
en utilisant le bus de communication numérique.

11. La vanne de commande indépendante de la pression comprenant une vanne de commande (1) selon l'une quelconque des revendications 1 à 10.

12. Procédé pour commander une vanne (1), la vanne (1) comprenant une voie de fluide (4), un capteur (5) pour échantillonner un ou plusieurs paramètre(s) d'un fluide qui s'écoule au travers de la voie de fluide (4), un étrangleur (6) qui est situé dans la voie de fluide (4), un actionneur (8) qui est couplé à l'étrangleur (6), l'étrangleur (6) pouvant être déplacé de façon sélective entre une première et une seconde position, la vanne (1) comprenant un filtre (10) qui présente une constante de temps et qui est en communication opérationnelle avec le capteur (5) et qui est configuré pour filtrer des signaux de paramètre qui sont indicatifs des un ou plusieurs paramètres en utilisant la constante de temps ;
le procédé comprenant les étapes constituées par :
la transmission d'un premier signal de position qui est indicatif de la première position à l'actionneur (8), le premier signal de position forçant l'actionneur (8) à déplacer l'étrangleur (6) dans la première position ;
la transmission d'un second signal de position qui est indicatif de la seconde position à l'actionneur (8), le second signal de position forçant l'actionneur (8) à déplacer l'étrangleur (6) dans la seconde position ;
la comparaison des premier et second signaux de position ;
**caractérisé par** :
si la première position est différente de la seconde position, la réalisation de :
la transmission d'un signal de désactivation au filtre (10), le signal de désactivation forçant le filtre (10) à arrêter le filtrage des signaux de paramètre prenant leur origine au niveau du capteur (5) et forçant le filtre (10) à transférer directement les signaux de paramètre prenant leur origine au niveau du capteur (5) au contrôleur (9).

13. Support non transitoire pouvant être lu par un ordinateur et contenant un programme qui exécute les étapes de la revendication 12.
